# EUROPÄISCHE PATENTSCHRIFT

(11) **EP 3 452 742 B1**
(45) Veröffentlichungstag und Bekanntmachung des Hinweises auf die Patenterteilung: **18.11.2020**
(21) Anmeldenummer: 17721356.8
(22) Anmeldetag: 28.04.2017
(51) Int. Cl.: F16K 31/122, F16K 11/044, A01J 5/04, A01J 7/02

(54) **SICHERHEITSVENTIL**
SAFETY VALVE
VANNE DE SÉCURITÉ

(30) Priorität: 04.05.2016 DE 102016108300
(43) Veröffentlichungstag der Anmeldung: 13.03.2019
(73) Patentinhaber: GEA Farm Technologies GmbH, 59199 Bönen (DE)
(72) Erfinder: BALKENHOL, Reinhard, 33098 Paderborn (DE); WIETHOFF, Magnus, 59514 Welver Dinker (DE); FIGGENER, Verena, 59302 Oelde (DE)
(74) Vertreter: Kleine, Hubertus
(86) Internationale Anmeldenummer: PCT/EP2017/060232
(87) Internationale Veröffentlichungsnummer: WO 2017/191057

(56) Entgegenhaltungen:
- WO-A1-2015/091319
- WO-A1-2015/091319
- US-A1- 2015 173 320
- US-A1- 2015 173 320

## Beschreibung

Die Erfindung betrifft ein Sicherheitsventil nach dem Oberbegriff des Anspruchs 1.

Derartige Sicherheitsventile werden auch als Block-Bleed-Block-Ventile bezeichnet und in Reinigungsvorrichtungen für Melkanlagen, insbesondere zum automatischen Melken von milchgebenden Tieren, beispielsweise Kühe, Schafe, Ziegen, eingesetzt. Der automatische Melkvorgang kann mittels so genannter Melkroboter durchgeführt werden. Das Sicherheitsventil wird zum Einbringen einer so genannten Dipp-Flüssigkeit auf die Zitze eines milchgebenden Tieres benötigt.

Es sind einschlägige nationale Vorschriften und Richtlinien, z.B. die amerikanischen FDA-Richtlinien, zu beachten und einzuhalten, welche für Reinigungsvorrichtungen für Melkanlagen und Melkausrüstungen, die mit Milch in Kontakt kommen, gelten. Das Sicherheitsventil umfasst zwei Blockventile und ein Bleedventil und wird aus einer ersten Schaltstellung, die im Weiteren Blockstellung genannt wird, in eine zweite Schaltstellung, die im Weiteren Durchlassstellung genannt wird, und zurück verstellt. In der Blockstellung müssen gleichzeitig die Blockventile geschlossen und das Bleedventil geöffnet sein, wobei in der Durchlassstellung die Blockventile geöffnet sind und das Bleedventil geschlossen ist.

Das Dokument DE 10 2013 114 595 A1 beschreibt ein Sicherheitsventil für eine Reinigungsvorrichtung für eine automatische Melkanlage. Weiterhin ist die Beschreibung der Funktion und des Aufbaus einer Reinigungsvorrichtung in dem Dokument WO 2010/053577 A1 angegeben. Weitere Sicherheitsventile sind aus der US2015/173320 A1 und der WO2015/091319 A1 vorbekannt.

Dieses Sicherheitsventil ist als ein Schieberventil ausgelegt. Als nachteilig wird dabei gesehen, dass bei den Anforderungen eines veränderten Prozesses die Lebensdauer nicht ausreicht. Der veränderte Reinigungs- und Dippprozess erfordert eine um eine Faktor 10 bis 15 erhöhte Schaltlebensdauer des Ventils.

Vor diesem Hintergrund besteht die Aufgabe der Erfindung darin, ein verbessertes Sicherheitsventil mit einer höheren Lebensdauer bei möglichst gleichbleibenden Kosten zu schaffen.

Diese Aufgabe wird durch ein Sicherheitsventil mit den Merkmalen des Anspruchs 1 gelöst.

Ein erfindungsgemäßes Sicherheitsventil für eine Reinigungsvorrichtung für eine Melkanlage zum Melken von milchgebenden Tieren, umfasst ein erstes Blockventil mit einem Eingangsanschluss, ein zweites Blockventil mit einem Ausgangsanschluss, ein Bleedventil mit einem Bleedausgangsanschluss, eine Kolbenstange und eine Antriebseinheit, wobei das Sicherheitsventil von einer Blockstellung, in welcher das erste Blockventil und das zweite Blockventil zur Blockierung des Eingangsanschlusses und des Ausgangsanschlusses geschlossen sind und das Bleedventil zur Verbindung des Bleedausgangsanschlusses mit einer Verbindung geöffnet ist, in eine Durchlassstellung, in welcher das erste Blockventil und das zweite Blockventil zur Verbindung des Eingangsanschlusses über die Verbindung mit dem Ausgangsanschluss geöffnet sind und das Bleedventil zur Blockierung des Bleedausgangsanschlusses geschlossen ist, und zurück verstellbar ausgebildet ist. Das erste Blockventil, das zweite Blockventil und das Bleedventil des Sicherheitsventils sind als Sitzventile mit einer gemeinsamen Kolbenplatte ausgebildet.

Damit wird vorteilhaft erreicht, dass die Ausbildung der Blockventile und des Bleedventils als Sitzventile die geforderte höhere Schaltlebensdauer von 10 Jahren erzielen und die dabei auftretenden 15^{∗}10⁶ Schaltzyklen erreichen kann.

Die Ausführung als Sitzventil erbringt zudem den Vorteil, dass eine dynamische Belastung von Bauteilen durch deutlich geringen Verstellwege um ein Vielfaches gesenkt werden kann.

Erfindungsgemäß weist die Kolbenplatte Sitzabschnittsflächen der als Sitzventile ausgebildeten Ventile auf. Diese Sitzabschnittsflächen können z.B. in einem Fertigungsvorgang zusammen hergestellt werden. Zudem fallen an der Kolbenplatte keine Dichtungen an, wodurch sich eine Teilezahl erniedrigt.

In einer weiteren Ausführung ist vorgesehen, dass die Kolbenplatte mit einer Seite über die Kolbenstange mit einer ersten Antriebseinheit gekoppelt und mit einer der einen Seite gegenüberliegenden Seite mittels einer Antriebsstange mit einer zweiten Antriebseinheit gekoppelt ist. Dies ergibt einen kompakten Aufbau. Zudem ist ein im Vergleich zum Stand der Technik wesentlich geringer Verstellweg bzw. Hub von 3 mm im Gegensatz zu 8 mm im Stand der Technik möglich. Dadurch wird eine schnellere Schaltzeit erreicht. Außerdem können geringere Mengen dosiert werden, d.h. ein Verlust kann verringert werden.

Hierbei kann die erste Antriebseinheit einen Antriebszylinder mit einem Antriebskolben aufweisen, und die zweite Antriebseinheit kann ein Kraftspeicherelement, z.B eine Druckfeder, aufweisen, welches die Kolbenplatte zum Verschluss der Blockventile in die Blockstellung vorspannt und in der Blockstellung hält.

Alternativ können die erste Antriebseinheit und die zweite Antriebseinheit jeweils einen Antriebszylinder mit einem Antriebskolben aufweisen. Damit können gleiche Teile verwendet werden.

In einer weiteren Alternative kann die Kolbenplatte mit einer Seite über die Kolbenstange mit einem doppeltwirkenden Antriebszylinder der Antriebseinheit gekoppelt sein. Hierbei ergibt sich der Vorteil einer besonders kompakten Bauweise, die nur sehr geringen Bauraum beansprucht.

Erfindungsgemäß weist das Sicherheitsventil einen Ventilkörper mit einer Längsachse auf, der in einer Sandwichbauweise aus verschiedenen Funktionseinheiten aufgebaut ist, die eine Blockventileinheit, eine Bleedventileinheit, eine Anschlusseinheit und mindestens eine Antriebseinheit umfassen. Es ergibt sich ein modularer Aufbau.

In einer Ausführung ist die Verbindung aus einer Druckkammer zwischen der Blockventileinheit und der Bleedventileinheit gebildet, wobei die Kolbenplatte in der Drucckammer aus der Durchlassstellung in die Blockstellung und zurück verstellbar angeordnet ist.

Eine weitere Ausführung sieht vor, dass in der Blockstellung das erste Blockventil und das zweite Blockventil zur Blockierung des Eingangsanschlusses und des Ausgangsanschlusses durch eine Seite der Kolbenplatte geschlossen sind und das Bleedventil den Bleedausgangsanschluss mit der Druckkammer verbindet. Beide Blockventile werden von der gemeinsamen Kolbenplatte verschlossen und geöffnet. Die Ventile benötigen nur eine geringe Anzahl von Dichtungen, die im Gegensatz zum Stand der Technik nicht durch Verstellen eines Schiebers durch Reibung beansprucht werden, sondern nur durch Druck, wodurch sich ein geringerer Verschleiß als weiterer Vorteil ergibt.

In der Durchlassstellung kommunizieren das erste Blockventil und das zweite Blockventil durch die Druckkammer zur Verbindung des Eingangsanschlusses mit dem Ausgangsanschluss, und das Bleedventil ist zur Blockierung des Bleedausgangsanschluss durch die andere Seite der Kolbenplatte geschlossen. Auch hier ergeben sich die oben genannten Vorteile hinsichtlich der Dichtungen und der gemeinsamen Kolbenplatte.

Es ist in weiterer Ausgestaltung vorgesehen, dass die Blockventile und das Bleedventil jeweils eine Dichtungsbuchse mit jeweils einem Sitzabschnitt aufweisen, wobei jeder Sitzabschnitt mit jeweils einer zugeordneten Sitzabschnittsfläche der Kolbenplatte zusammenwirkt. Dies ergibt einen einfachen kostengünstigen Aufbau mit einer geringen Anzahl von Dichtungen. Zudem können die Dichtungsbuchsen ausgewechselt werden, was zur Anpassung an unterschiedliche Einsatzfälle und bei Wartung vorteilhaft ist.

In einer anderen Ausführung ist das Sicherheitsventil mit einer Belüftungseinrichtung zur Kopfbelüftung eines zuzuordnenden Zitzenbechers einer zugehörigen Melkanlage versehen, welche mit dem Ausgangsanschluss des zweiten Blockventils kommuniziert. Der Vorteil hierbei ist, dass die Belüftungseinrichtung in bzw. an dem Sicherheitsventil in kompakter Bauweise angebracht werden kann. Beispielsweise ist ein Rückschlagventil am Ausgangsanschluss des zweiten Blockventils möglich.

Eine noch andere Ausführung sieht vor, dass die Belüftungseinrichtung eine Belüftungsöffnung, die mit einem Konus bzw. mit einer konisch ausgebildeten Bohrung, z.B. einer Senkung, verbunden ist, aufweist, wobei die Belüftungsöffnung in die Kolbenplatte eingeformt ist. Hierbei besteht der Vorteil darin, dass ein Verkleben eines Rückschlagventils aufgrund von Glyzerinbestandteilen im Dippmedium nicht vorkommt. Außerdem besteht ein weiterer Vorteil darin, dass die Belüftungsöffnung wie auch der Konus in einfacher Weise in die Kolbenplatte eingeformt werden können ohne die Notwendigkeit zusätzlicher Bauelemente. Anstelle des Konus ist es beispielsweise auch möglich zumindest eine Stufenbohrung vorzusehen.

Die Belüftungseinrichtung kann auch einstellbar ausgeführt sein, z.B. mit Einstellschrauben oder verschiedenen Einsätzen, welche die Belüftungsbohrung mit Konus aufweisen und in die Kolbenplatte eingesetzt werden können. Dies kann in einer weiteren Ausführung auch automatisch dergestalt erfolgen, dass direkt und individuell auf den Melkprozess eingewirkt werden kann, wie beispielsweise für ein besseres Haften eines Zitzengummis des Zitzenbechers an der Zitze und/oder schnellerer Milchtransport bei hohen Milchflüssen.

In einer weiteren Ausführung weisen die Kolbenplatte und der Antriebskolben eine Verdrehsicherung um eine Kolbenachse auf. Dies ist nicht nur besonders vorteilhaft im Falle der Belüftungseinrichtung in der Kolbenplatte, sondern auch bei einem Sensor, dessen Hysterese durch eine Verdrehung eines Sensorbetätigers, z.B. ein Magnet, nicht verändert wird, was eine Zuverlässigkeit einer Stellungserfassung des Sicherheitsventils durch den Sensor erhöht.

Die Verdrehsicherung kann in einer Ausführung durch eine Form der Kolbenplatte und/oder des Antriebskolbens gebildet sein, z.B. ovale Form, formschlüssige Eingriffe usw.

In einer alternativen Ausführung kann die Verdrehsicherung durch die Form eines Flansches der Kolbenstange, an welchem die Kolbenplatte befestigt ist, und eine mit ihm kommunizierende ortsfeste Ausnehmung gebildet sein. Dies ist besonders vorteilhaft, da eine besondere Formgebung der Druckkammer und/oder Kolbenkammer nicht erforderlich ist.

In einer weiteren Alternative ist die Verdrehsicherung durch einen Stift gebildet, der eine Führung für die Kolbenplatte bildet. Dies ist einfach herstellbar.

Eine andere Ausführung sieht vor, dass das Sicherheitsventil einen Sensor zur Erfassung der Blockstellung oder/und der Durchlassstellung aufweist. Damit kann eine Funktion des Sicherheitsventils, insbesondere eine Sicherheitsfunktion der Blockstellung, einfach überwacht werden.

Dazu ist es in einer weiteren Ausführung vorgesehen, dass der Sensor mit einem Sensorbetätigungselement, das an oder in dem Antriebskolben angebracht ist, zusammenwirkt. Dies ergibt einen einfachen Aufbau.

Eine weitere Ausführung bietet den Vorteil einer berührungslosen Betätigung, wenn das Sensorbetätigungselement ein Magnet ist. Der Sensor kann in diesem Fall ein magnetfeldempfindliches Bauteil, wie z.B. Reed-Kontakt, Hall-Sensor, HF-Spule etc. aufweisen.

Das Sicherheitsventil bietet als Block-Bleed-Block- (BBB-) Ventil den Vorteil eines großen Einsatzgebietes, insbesondere erfüllt es einschlägige Sicherheitsvorschriften, z.B. der FDA in den USA. Aufgrund des Antriebs und der Konstruktion des erfindungsgemäßen Sicherheitsventils kann eine deutlich gesteigerte Gesamtzyklenzahl erreicht werden. Eine Zahl von dynamisch belasteten Dichtungen ist durch deutlich geringere Verstell- bzw. Schaltwege um ein Vielfaches gesenkt.

Mehrere Sicherheitsventile können in einfacher Weise miteinander verbunden und als Sicherheitsventilanordnung kompakt verwendet werden.

Weitere Vorteile und Einzelheiten gehen aus dem in den Figuren der Zeichnung dargestellten Ausführungsbeispiel hervor. Hierbei zeigen:
- Figur 1: eine schematische Darstellung eines beispielhaften Einsatzfalls eines erfindungsgemäßen Sicherheitsventils bei einer beispielhaften Melkanlage;
- Figur 2: ein Sicherheitsventil in einer schematischen Blockdarstellung;
- Figuren 2a-2b: schematische Schaltbilder des Sicherheitsventils nach Figur 2 in zwei unterschiedlichen Schaltstellungen;
- Figuren 3-4: schematische Blockdarstellungen des Sicherheitsventils nach Figur 2 mit einer Belüftungseinrichtung;
- Figur 5: das Sicherheitsventil nach Figur 4 mit einer Belüftungseinrichtung in einer schematischen Blockdarstellung;
- Figuren 5a-5b: schematische Schaltbilder des Sicherheitsventils mit der Belüftungseinrichtung nach Figur 5 in zwei unterschiedlichen Schaltstellungen;
- Figur 6: ein Ausführungsbeispiel des Sicherheitsventils nach Figur 5 in einer Längsschnittansicht;
- Figuren 7-8: schematische Schnittansichten von Varianten des Ausführungsführungsbeispiels nach Figur 6;
- Figur 9: eine schematische Schnittansicht der Variante nach Figur 8 mit einem Sensor; und
- Figur 10: eine schematische Perspektivansicht des Ausführungsführungsbeispiels nach Figur 6.

In den Figuren sind gleiche bzw. ähnliche Funktionselemente und Bauteile mit gleichen Bezugszeichen versehen.

Die Begriffe "oben", "unten", "links", "rechts" beziehen sich auf die jeweilige Anordnung in den Figuren. Andere, nicht gezeigte, Einbaulagen, z.B. auf dem Kopf, seitlich oder in einer anderen Lage, sind natürlich möglich.

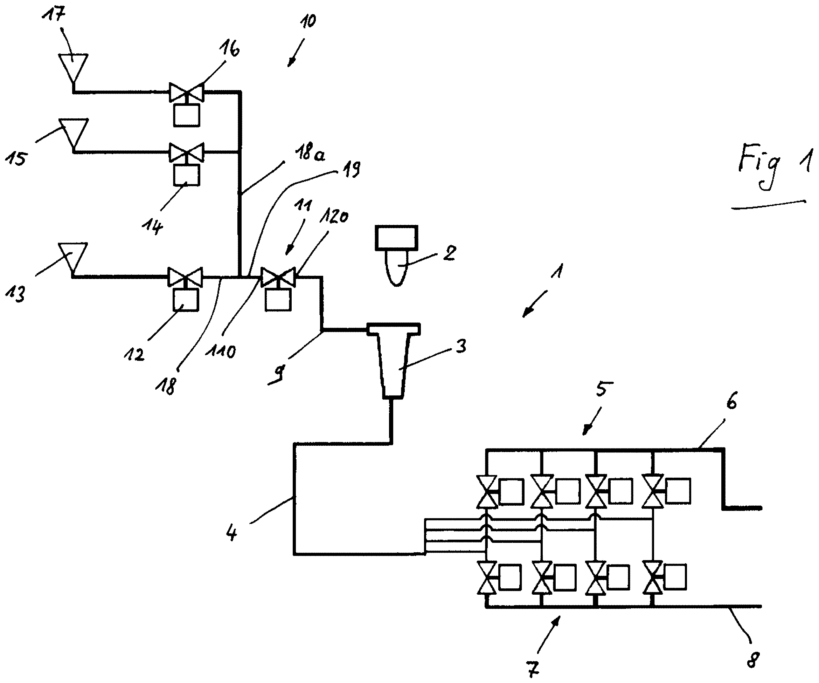

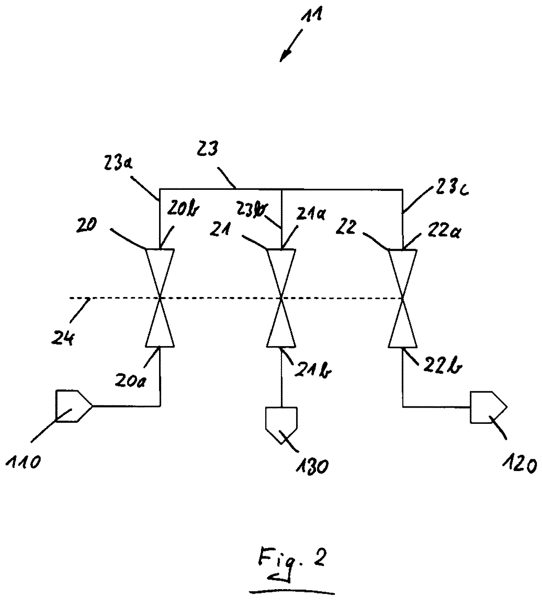

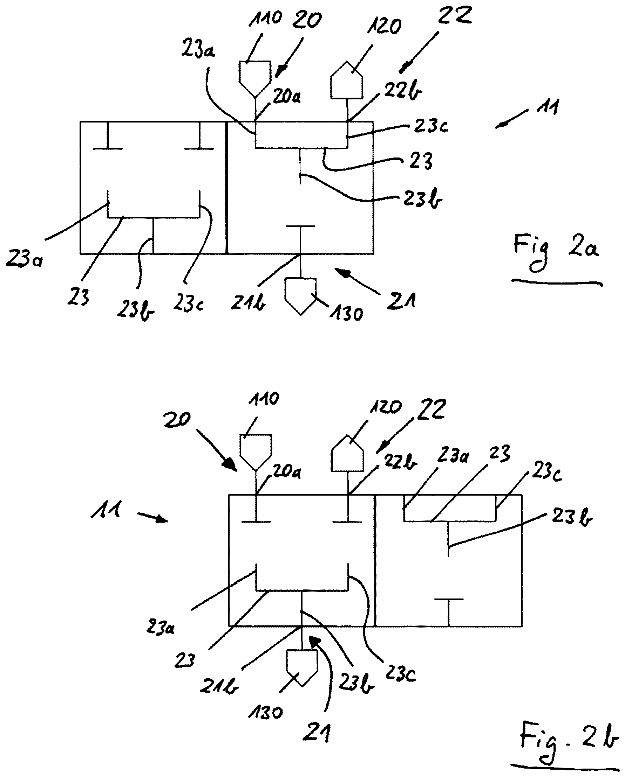

Figur 1 zeigt eine schematische Darstellung eines beispielhaften Einsatzfalls eines erfindungsgemäßen Sicherheitsventils 11 bei einer beispielhaften Melkanlage 1. In Figur 2 ist ein Sicherheitsventil 11 in einer schematischen Blockdarstellung gezeigt. Figuren 2a und 2b stellen schematische Schaltbilder des Sicherheitsventils 11 nach Figur 2 in zwei unterschiedlichen Schaltstellungen dar.

Stellvertretend für ein zu melkendes Tier ist hier eine Zitze 2 desselben Tieres gezeigt. Darunter ist ein dieser Zitze 2 zuzuordnender Zitzenbecher 3 eines nicht gezeigten Melkzeugs (z.B. eines Melkroboters) der Melkanlage 1 angeordnet, der bei einem Melkvorgang an die Zitze 2 angelegt wird. Bei einem Tier, z.B. einer Kuh, sind üblicherweise vier Zitzen 2 vorhanden, denen jeweils ein Zitzenbecher 3 zugeordnet ist.

Jeder Zitzenbecher 3 ist über eine Becherleitung 4 an zwei Sicherheitsventilvorrichtungen angeschlossen, von denen die eine vier Gutmilchventile 5 und die andere vier Schlechtmilchventile 7 aufweist. Die Gutmilchventile 5 sind mit einer Gutmilchleitung 6 verbunden, und die Schlechtmilchventile 7 sind an einer Schlechtmilchleitung 8 angeschlossen. Die Weiterführungen dieser Leitungen sollen hier nicht behandelt werden. Hinsichtlich Aufbau und Funktion wird auf die Dokumente US 2012/0017836 A1 und WO 2010/053577 A1 verwiesen.

Die zwei Sicherheitsventilvorrichtungen dienen dazu, ein versehentliches Ansaugen von unerwünschten Medien aus der Schlechtmilchleitung 8 bzw. einer "Reinigungsleitung" (hier die Becherleitung 4 bei einem Reinigungsvorgang) in die Gutmilchleitung 6 zu vermeiden.

Die Gutmilchventile 5 und die Schlechtmilchventile 7 der Sicherheitsventilvorrichtungen sind als so genannte "Block-Bleed-Block-Ventile" ausgebildet, deren Aufbau und Funktion dem Dokument US 2015/0173320 A1 entnommen werden kann.

Weiterhin ist der Zitzenbecher 3 über eine Zuleitung 9 mit einer Reinigungseinrichtung 10 (so genannte Pre-Dipp/Post-Dipp-Vorrichtungen) über ein Sicherheitsventil 11 verbunden. Hierbei ist pro Zitze 2 bzw. Zitzenbecher 3 mindestens ein Sicherheitsventil 11 vorgesehen. Die Reinigungseinrichtung 10 umfasst hier das Sicherheitsventil 11, ein Dippventil 12 mit einer Dippmediumquelle 13, ein Wasserventil 14 mit einer Wasserquelle 15, und ein Luftventil 16 mit einer Spülluftquelle 17 und Verbindungsleitungen 9, 18, 18a, 19. Das Dippventil 12, das Wasserventil 14 und das Luftventil 16 werden auch als Medienventile bezeichnet.

Ein maximaler Druck der Medien liegt beispielsweise bei 5 bar.

Bei einem Dippvorgang (z.B. Post-Dipp) öffnet das Dippventil 12 für eine definierte Zeit. In diesem Zeitraum wird eine Dippmediummenge aus der Dippmediumquelle 13 dosiert. Das Luftventil 16 öffnet, und das Dippmedium, das sich dann noch in der Zuleitung 9 befindet, welche die Medien zum Zitzenbecher 3 führt, wird mit Druckluft aus der Spülluftquelle 17 zu der Zitze 2 befördert und durch eine Düse an der Zitze 2 verteilt.

Um zu vermeiden, dass durch z.B. einen technischen Defekt des Dippventils 12 Dippmedium unkontrolliert in den Zitzenbecher 3 gelangt, ist zwischen den Medienventilen 12, 14, 16 und dem Zitzenbecher 3 das Sicherheitsventil 11 vorgesehen. Das Sicherheitsventil 11 ist nur während des Dippvorgangs und während der Reinigung des Systems mit Wasser (aus der Wasserquelle 15 über das Wasserventil 14) geöffnet, d.h. steht in seiner geöffneten Stellung, die auch als Durchgangsstellung bezeichnet wird. Ansonsten ist das Sicherheitsventil 11 geschlossen, d.h. in seiner geschlossenen Stellung, die auch Blockstellung genannt wird.

Eine ausführliche Beschreibung der Reinigungseinrichtung 10 kann den Dokumenten US 2012/0017836 A1 und WO 2010/053577 A1 entnommen werden.

Das Sicherheitsventil 11 weist einen Eingangsanschluss 110, einen Ausgangsanschluss 120 und einen Bleedausgangsanschluss 130 auf. Der Eingangsanschluss 110 ist über eine Eingangsleitung 19 mit Ausgangsleitungen 18, 18a der Medienventile 12, 14, und 16 verbunden.

Das Sicherheitsventil 11 ist als so genanntes "Block-Bleed-Block-Ventil" ausgebildet und umfasst zwei Blockventile, nämlich ein erstes Blockventil 20 und ein zweites Blockventil 22, und ein Bleedventil 21. Je nach Strömungsrichtung des durchströmenden Mediums werden das erste Blockventil 20 als Einlassventil und das zweite Blockventil 22 als Auslassventil oder umgekehrt bezeichnet. Diese drei Ventile 20, 21 und 22 sind miteinander derart verbunden, dass das erste Blockventil 20 und das zweite Blockventil 22 strömungsmäßig in Reihe geschaltet sind, wobei das Bleedventil 21 mit einer gemeinsamen Verbindung 23 des ersten Blockventils 20 und des zweiten Blockventils 22 verbunden ist. Auf diese Weise ist das Sicherheitsventil 11 als "Block-Bleed-Block-Ventil" gebildet.

Die zwei Blockventile 20 und 22 sowie das Bleedventil 21 werden durch einen gemeinsamen Betätiger 24 derart betätigt, dass das Sicherheitsventil 11 in einer Stellung eine so genannte Durchlassstellung einnimmt, aus welcher es in eine andere Stellung, eine so genannte Blockstellung, und zurück verstellt werden kann. Dies wird unten noch näher erläutert.

Das erste Blockventil 20 des Sicherheitsventils 11 ist mit einem Einlass 20a mit dem Eingangsanschluss 110 verbunden. Somit ist das erste Blockventil 20 des Sicherheitsventils 11 über den Eingangsanschluss 110 mit der Eingangsleitung 19 und über die Ausgangsleitungen 18, 18a an die Medienventile 12, 14, 16 angeschlossen.

Weiterhin ist ein Auslass 20b des ersten Blockventils 20 über einen Verbindungsanschluss 23a der Verbindung 23 und über einen weiteren Verbindungsanschluss 23c der Verbindung 23 mit einem Einlass 22a des zweiten Blockventils 22 verbunden. Ein Auslass 22b des zweiten Blockventils 22 ist mit dem Ausgangsanschluss 120 an die Zuleitung 9 und somit an dem Zitzenbecher 3 angeschlossen.

Die Verbindung 23 kommuniziert außerdem über einen noch weiteren Verbindungsanschluss 23b mit einem Einlass 21a des Bleedventils 21, welches mit seinem Auslass 21b mit dem Bleedausgangsanschluss 130 des Sicherheitsventils 11 verbunden ist. Der Bleedausgangsanschluss 130 kann mit einem separaten Behälter oder/und mit der Atmosphäre kommunizieren.

Das Sicherheitsventil 11 hat eine Funktion eines Block-Bleed-Block-Ventils. Wenn die Blockventile 20 und 22 geöffnet sind, ist das Bleedventil 21 geschlossen. Diese Stellung wird im Weiteren Durchlassstellung des Sicherheitsventils 11 genannt. In einer so genannten Blockstellung des Sicherheitsventils 11 sind die Blockventile 20 und 22 geschlossen, wobei das Bleedventil 21 geöffnet ist und den Bleedausgangsanschluss 130 mit der Verbindung 23 verbindet. Damit ist in der Blockstellung sichergestellt, dass einerseits das erste Blockventil 20 einen Durchfluss von Medium aus den Medienquellen 13, 15, 17 vollständig blockiert und andererseits das zweite Blockventil 22 die Verbindung zum Zitzenbecher 3 über die Zuleitung 9 sperrt.

In Figur 2a ist ein schematisches Schaltbild des Sicherheitsventils 11 in der Durchlassstellung gezeigt. Die Blockstellung des Sicherheitsventils 11 zeigt das schematische Schaltbild nach Figur 2b.

Die Durchlassstellung wird bei Reinigungsvorgängen (Pre-Dip, Post-Dip, Wasserspülen) eingenommen, wobei die Blockstellung bei Melkvorgängen eingestellt ist. Außerdem wird die Blockstellung als Sicherheitsstellung immer bei nicht aktiviertem Antrieb des Sicherheitsventils 11 eingenommen. Mit anderen Worten, das Sicherheitsventil 11 ist antriebslos in Blockstellung.

In der Blockstellung ist somit außerdem gewährleistet, dass bei einer möglichen Undichtigkeit des ersten Blockventils 20 (z.B. durch Verschleiß) Medium aus den Medienquellen 13, 15, 17 nicht in die als Becherleitung 4 ausgebildete Ansaugleitung der Sicherheitsventilvorrichtungen mit den Milchventilen 5, 7 gelangen kann, da die Verbindung 23 des Sicherheitsventils 11 durch das geöffnete Bleedventil 21 mit dem Bleedausgangsanschluss 130 (z.B. in die Atmosphäre oder in ein geeignetes Sammelgefäß) verbunden ist.

Auch im Fall einer möglichen Undichtigkeit des zweiten Blockventils 22 in der Blockstellung kann über die Zuleitung 9 aufgrund des geöffneten Bleedventils 21 kein Medium aus den Medienquellen 13, 15, 17 angesaugt werden.

Das Sicherheitsventil 11 wird unten noch ausführlich beschrieben.

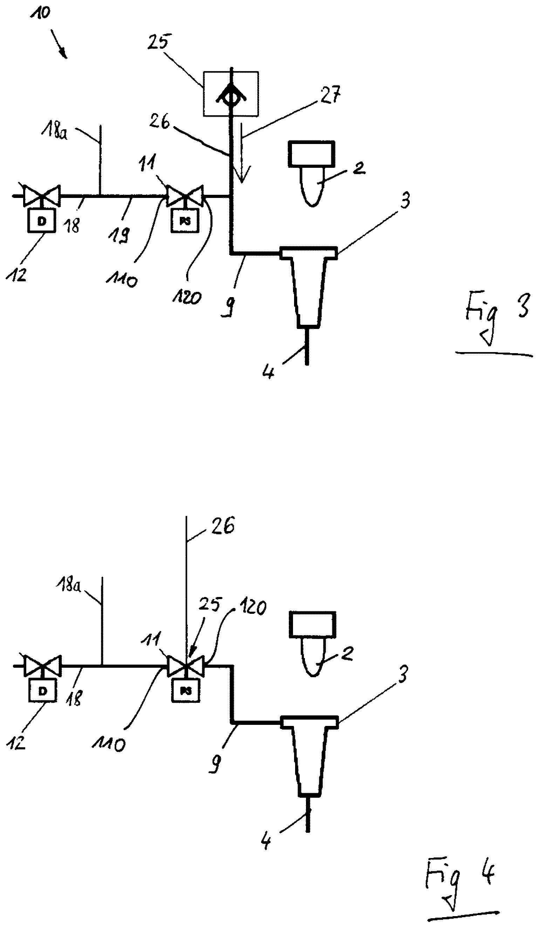

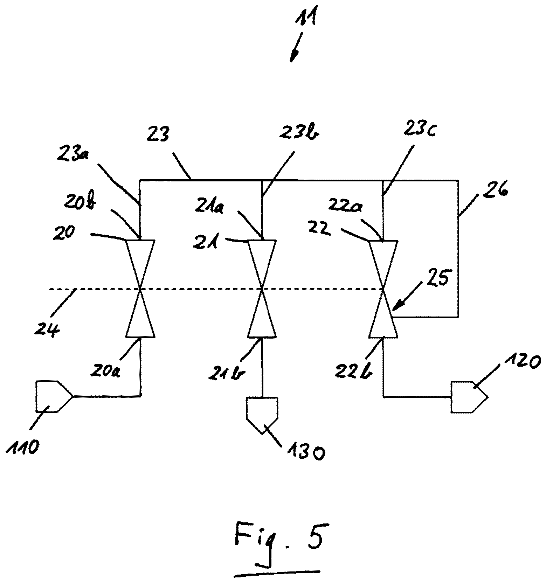

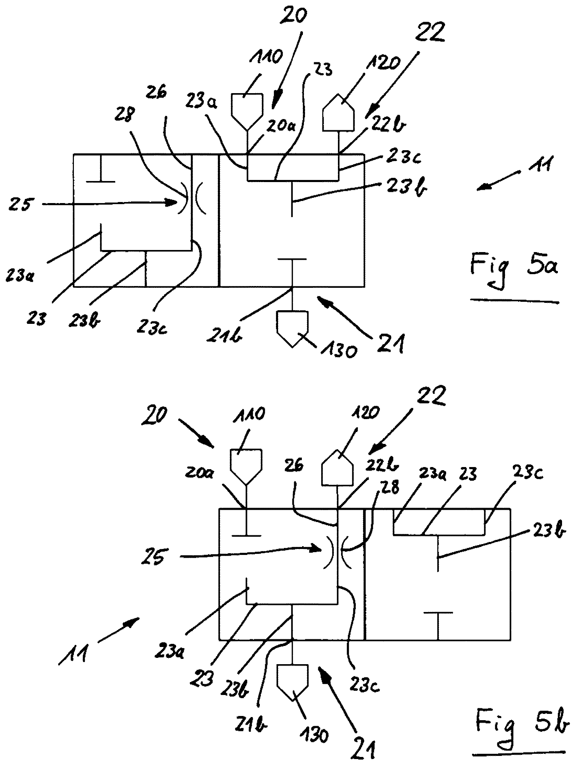

In den Figuren 3-4 sind schematische Blockdarstellungen des Sicherheitsventils 11 nach Figur 2 mit einer Belüftungseinrichtung 25 dargestellt. Figur 5 zeigt das Sicherheitsventil 11 nach Figur 4 mit der Belüftungseinrichtung 25 in einer schematischen Blockdarstellung. Figuren 5a-5b zeigen dazu schematische Schaltbilder des Sicherheitsventils 11 mit der Belüftungseinrichtung 25 nach Figur 5 in den unterschiedlichen Schaltstellungen Durchlassstellung und Blockstellung.

Die Zuleitung 9, welche von dem Ausgangsanschluss 120 des Sicherheitsventils 11 zu dem Kopf des Zitzenbechers 3 führt, sollte während des Melkvorgangs zum Kopf des Zitzenbechers 3 hin belüftet werden. Eine solche Belüftung verhindert ein Eindringen von Flüssigkeit (Milch, Wasser und Reinigungsmittel) in die Zuleitung 9. In Figur 3 ist eine Belüftungseinrichtung 25 gezeigt, welche eine Belüftungsleitung 26, die mit der Zuleitung 9 kommuniziert, mit der Atmosphäre verbindet. Auf diese Weise wird ein Luftstrom 27 erzeugt, welcher durch eine kleine Düse (Querschnittsbegrenzung) in der Belüftungseinrichtung 25 so reguliert wird, dass auf der einen Seite keine Flüssigkeit aus Richtung des Zitzenbechers 3 in die Zuleitung 9 gelangen kann, andererseits ein Vakuum in der Becherleitung 4 und im Zitzenbecher 3 nicht zu stark verringert wird.

In der Anordnung nach Figur 3 wird diese Belüftung durch ein Rückschlagventil der Belüftungseinrichtung 25 gewährleistet, das z.B. in der Belüftungsleitung 26 zwischen Sicherheitsventil 11 und Zitzenbecher 3 installiert ist.

Eine weitere Ausführung einer Belüftungseinrichtung 25 ist in Figur 4 dargestellt. Hierbei ist die Belüftungseinrichtung 25 in dem Sicherheitsventil 11 integriert, wobei die Belüftungsleitung 26 aus dem Sicherheitsventil 11 heraus mit der Atmosphäre kommuniziert.

Die Belüftungseinrichtung nach Figur 4 ist in Figur 5 zunächst schematisch dargestellt. Die Figur 5 weist als Grundlage das Sicherheitsventil 11 nach Figur 2 erweitert um die Belüftungseinrichtung 25 auf. Dabei ist die Belüftungseinrichtung 25 in dem zweiten Blockventil 22 angeordnet und über die Belüftungsleitung 26 mit der Verbindung 23 verbunden.

Die Durchlassstellung des Sicherheitsventils 11 mit der Belüftungseinrichtung 25 nach Figur 5 ist in Figur 5a dargestellt und entspricht der Durchlassstellung des Sicherheitsventils 11 nach Figur 2a. Das heißt, dass die beiden Blockventile 20 und 22 in Reihe über die Verbindung 23 verbunden und geöffnet sind, wobei das Bleedventil 21 geschlossen ist.

In der Blockstellung des Sicherheitsventils 11 mit der Belüftungseinrichtung 25 nach Figur 5 ist jedoch, wie in Figur 5b deutlich zu erkennen ist, das geschlossene zweite Blockventil 22 über die Belüftungseinrichtung 25 mit der Verbindung 23 und über das geöffnete Bleedventil 21 mit dem Bleedausgangsanschluss 130 verbunden. Auf diese Weise kommuniziert die an dem Ausgangsanschluss 120 angeschlossene Zuleitung 9 (siehe Figur 5) über die Belüftungsleitung 26 mit der Verbindung 23, welche ihrerseits durch das geöffnete Bleedventil 21 über den Bleedausgangsanschluss 130 mit der Atmosphäre kommuniziert.

Die Belüftungseinrichtung 25 weist hier eine Belüftungsöffnung 28 mit einem kleinen, definierten Querschnitt auf, wie unten noch beschrieben wird.

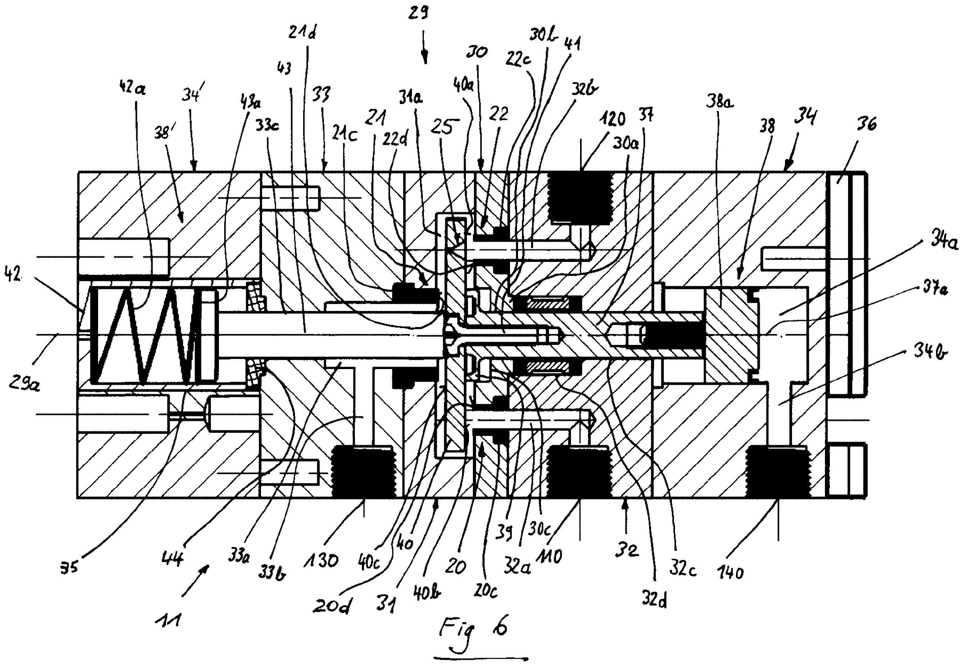

Figur 6 zeigt ein Ausführungsbeispiel des Sicherheitsventils 11 nach Figur 5 in einer Längsschnittansicht.

Das Sicherheitsventil 11 weist einen Ventilkörper 29 mit einer Längsachse 29a auf, der hier in einer Art Sandwichbauweise aus verschiedenen Funktionseinheiten aufgebaut ist. In dieser Ausführung umfasst der Ventilkörper 29 eine Blockventileinheit 30, eine Bleedventileinheit 31, eine Anschlusseinheit 32, eine Bleedanschlusseinheit 33, eine erste Antriebseinheit 34 und eine zweite Antriebseinheit 34'. Zudem weist das Sicherheitsventil 11 eine Kolbenstange 37 mit einer Kolbenplatte 40, eine Antriebsstange 43 und in dieser Ausführung eine Sensorhalterung 36 auf.

Die Blockventileinheit 30 ist zentral in dem Ventilkörper 29 angeordnet. Auf ihrer linken Seite ist sie mit der Bleedventileinheit 31 verbunden, wobei an der rechten Seite der Blockventilplatte 30 die Anschlusseinheit 32 angeordnet ist. Die Bleedventileinheit 31 ist auf ihrer linken Seite mit der Bleedanschlusseinheit 33 verbunden. An der Anschlusseinheit 32 wiederum ist auf deren rechter Seite die erste Antriebseinheit 34 angeordnet, wobei die zweite Anschlusseinheit 34' an der linken Seite der Bleedanschlusseinheit 33 angebracht ist. An der rechten Seite der ersten Antriebseinheit 34 ist die Sensorhalterung 36 befestigt. Alle Einheiten sind miteinander in nicht näher beschriebener Weise zur Bildung des Ventilkörpers 29 verbunden.

Die Bleedventileinheit 31 ist mit einer Druckkammer 31a auf ihrer zur der Blockventileinheit 30 weisenden Seite versehen. Diese Druckkammer 31a ist eine Ausnehmung in dem Körper der Bleedventileinheit 31, die sich etwa über die halbe Ausdehnung der Bleedventileinheit 31 in Richtung einer Längsachse des Sicherheitsventils 31 erstreckt. So wird die Druckkammer 31a auf der linken Seite von einem Boden in der Bleedventileinheit 31, durch eine umlaufende Wandung der Bleedventileinheit 31 und von der rechten offenen Seite her durch die Blockventileinheit 30 festgelegt.

Die Blockventileinheit 30 und die Bleedventileinheit 31 bilden zusammen mit der Kolbenplatte 40 das erste Blockventil 20, das zweite Blockventil 22 und das Bleedventil 21. Eine Dichtungsbuchse 20c des ersten Blockventils 20 und eine Dichtungsbuchse 22c des zweiten Blockventils 22 sind in der Blockventileinheit 30 eingesetzt, wobei die Längsachsen der Dichtungsbuchsen 20c, 22c parallel zu der Längsachse 29a des Sicherheitsventils 11 verlaufen. Die Dichtungsbuchsen 20c, 22c münden jeweils mit einem Sitzabschnitt 20d, 22d in die Druckkammer 31a. Auf diese Weise bildet die Druckkammer 31a die Verbindung 23 des Sicherheitsventils 11 wie oben im Zusammenhang mit Figuren 2, 2a, 2b, 5, 5a, 5b beschrieben.

Eine Dichtungsbuchse 21c des Bleedventils 21 ist in den Boden der Druckkammer 31a eingesetzt. Eine Längsachse der Dichtungsbuchse 21c des Bleedventils 21 liegt parallel zu den Längsachsen der anderen Dichtungsbuchsen 20c, 22d der Blockventile 20, 22 und verläuft hier in der Längsachse 29a des Sicherheitsventils 11. Die Dichtungsbuchse 21c des Bleedventils 21 mündet mit einem Sitzabschnitt 21d ebenfalls in die Druckkammer 31a.

Das erste Blockventil 20 ist aus dem Sitzabschnitt 20d der Dichtungsbuchse 20c und einer dem Sitzabschnitt 20d gegenüber stehenden Sitzabschnittsfläche 40b der Kolbenplatte 40 gebildet. Ebenso ist das zweite Blockventil 22 aus dem Sitzabschnitt 22d der Dichtungsbuchse 22c und einer dem Sitzabschnitt 22d gegenüber stehenden Sitzabschnittsfläche 40a der Kolbenplatte 40 gebildet. Die Sitzabschnittsflächen 40a und 40b der Kolbenplatte 40 liegen auf derselben Seite der Kolbenplatte 40, welche zu der Blockventileinheit 30 weist.

Die andere Seite der Kolbenplatte 40, welche zu der Bleedventileinheit 31 weist, wird auch als Stirnseite der Kolbenplatte 40 bezeichnet und ist mit einer weiteren, hier zentralen Sitzabschnittsfläche versehen, welche mit dem Sitzabschnitt 21d der Dichtungsbuchse 21c des Bleedventils 21 dieses Bleedventil 21 bildet.

Auf diese Weise ist das Sicherheitsventil 11 als ein so genanntes Sitzventil ausgebildet.

Jede Dichtungsbuchse 20c, 21c, 22c weist einen hier nicht bezeichneten Buchsenflansch auf, welcher eine axiale Festlegung der jeweiligen Dichtungsbuchse 20c, 21c, 22c in dem Körper der zugehörigen Funktionseinheit 30, 31 bildet. Dabei sind die Buchsenflansche der Dichtungsbuchsen 20c, 22c der Blockventile 20, 22 so angeordnet, dass sie auf der Seite der Blockventileinheit 30 liegen, an welcher die Anschlusseinheit 32 angebracht ist. Der Buchsenflansch der Dichtungsbuchse 21c des Bleedventils 21 liegt auf der Seite der Bleedventileinheit 31, an welcher die Bleedanschlusseinheit 33 angebracht ist und steht von dieser Seite derart in eine mit dem Buchsenflansch kommunizierende Öffnung der Bleedanschlusseinheit 33 hervor, dass dieser Eingriff eine Zentrierung der Bleedanschlusseinheit 33 mit der Bleedventileinheit 31 bildet.

Auch die Blockventileinheit 30 ist mit der Anschlusseinheit 32 zentriert verbunden. Dazu weist die Blockventileinheit 30 einen Zentriervorsprung 30a an ihrer zu der Anschlusseinheit 32 weisenden Seite auf, welcher in einer mit dem Zentriervorsprung 30a kommunizierenden Dichtungsaufnahme 32d der Anschlusseinheit 32 aufgenommen ist.

Die Anschlusseinheit 32 weist an ihrer Unterseite den Eingangsanschluss 110 des Sicherheitsventils 11 auf. Der Eingangsanschluss 110 ist mit einer Leitung 32a verbunden, die in die Anschlusseinheit 32 so eingeformt ist, dass sie parallel zu der Längsachse 29a des Sicherheitsventils 11 verläuft, sich nach links zu der Blockventileinheit 30 erstreckt und an der Oberfläche der zu der Blockventileinheit 30 weisenden Seite der Anschlusseinheit 32 mündet. Auf der Oberseite der Anschlusseinheit 32 ist der Ausgangsanschluss 120 angeordnet und mit einer weiteren Leitung 32b verbunden, die parallel zu der Leitung 32a ebenfalls in die Anschlusseinheit 32 eingeformt ist und an der Oberfläche der zu der Blockventileinheit 30 weisenden Seite der Anschlusseinheit 32 mündet.

Mittels der Zentrierung, welche der Zentriervorsprung 30a und die Dichtungsaufnahme 32d bilden, fluchten die Längsachsen der Dichtungsbuchsen 20c und 22c der Blockventile 20 und 22 mit den ihnen jeweils zugeordneten Leitungen 32a und 32b. Auf diese Weise ist die Dichtungsbuchse 20c des ersten Blockventils 20 über die Leitung 32a mit dem Eingangsanschluss 110 verbunden, wobei die Dichtungsbuchse 22c des zweiten Blockventils 22 durch die weitere Leitung 32b mit dem Ausgangsanschluss 120 kommuniziert.

In der Bleedanschlusseinheit 33 ist eine Bleedkammer 33a koaxial zu der Längsachse 29a des Sicherheitsventils 11 und zu der Längsachse der Dichtungsbuchse 21c des Bleedventils 21 eingeformt, wobei die Bleedkammer 33a sich etwa über die Hälfte der Länge der Bleedanschlusseinheit 33 in Längsrichtung der Längsachse 29a nach links erstreckt und in einem linken Drittel mit einer rechtwinklig zu Längsachse 29a nach unten verlaufenden Leitung 33a verbunden ist. Die Leitung 33a verbindet die Bleedkammer 33a und somit die Dichtungsbuchse 21c des Bleedventils 21 mit dem an der Unterseite der Bleedanschlusseinheit 33 angeordneten Bleedausgangsanschluss 130.

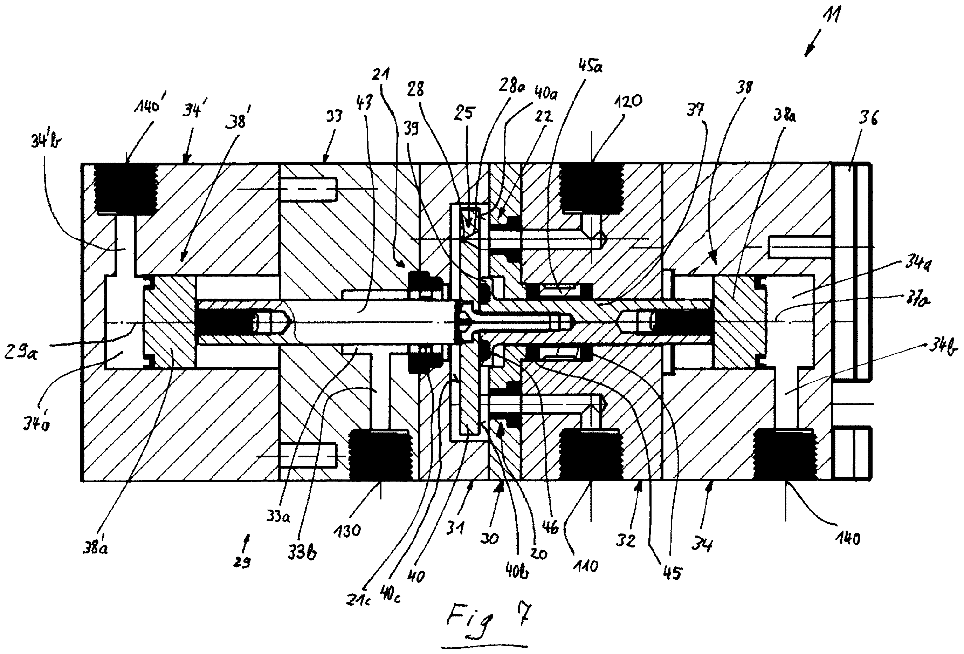

In der Druckkammer 31a ist die Kolbenplatte 40 angeordnet. Die Kolbenplatte 40 ist mittels der Kolbenstange 37 in Richtung der Längsachse 29a verschiebbar geführt angeordnet. Die Kolbenplatte 40 ist mittig mit einem Flansch 39, der an dem linken Ende der Kolbenstange 37 angeformt ist, über ein Befestigungselement 41, hier z.B. eine Schraube, fest verbunden. Dabei ist zwischen der Kolbenplatte 40 und dem Flansch 39 eine Dichtung 46 (siehe Figur 7) angeordnet.

Zur Aufnahme des Flansches 39 in der Blockstellung, die unten noch beschrieben wird, in der Blockventileinheit 30 ist eine mit dem Flansch 39 korrespondierende Ausnehmung 30c eingeformt, die nach rechts hin in eine kleinere Durchgangsöffnung 32b übergeht.

Die Kolbenstange 37 weist eine Längsachse 37a auf, welche in der Längsachse 29a des Sicherheitsventils 11 verläuft, und ist in einer Kolbenlagerung 32c der Anschlusseinheit 32 verschiebbar gelagert. Dabei erstreckt sich die Kolbenstange 37 von dem Flansch 39 aus nach rechts zunächst durch die Durchgangsöffnung 32b der Blockventileinheit 30 in die Dichtungsaufnahme 32d der Anschlusseinheit 32 hinein und verläuft dort durch Dichtungen 45 (siehe Figur 7) hindurch in die Kolbenlagerung 32c der Anschlusseinheit 32 hinein und durch diese hindurch bis in einen Antriebszylinder 38 der ersten Antriebseinheit 34. Die Dichtungen 45 sind durch eine Hülse 45a in Längsrichtung 29a beabstandet, wie aus Figur 7 hervorgeht.

An dem rechten Ende der Kolbenstange 37 ist ein Antriebskolben 38a befestigt, der in Längsrichtung 37a der Kolbenstange 37 und ebenfalls in Längsrichtung 29a des Sicherheitsventils 11 in einer Kolbenkammer 34a verschiebbar ist und nicht bezeichnete Kolbendichtungen zur Wandung der Kolbenkammer 34a aufweist. Die Kolbenkammer 34a ist über eine Leitung 34b mit einem Antriebsanschluss 140 verbunden. Der Antriebszylinder 38 wird über den Antriebsanschluss 140 mit einem Antriebsfluid, z.B. Druckluft, angetrieben.

Ein maximaler Schaltdruck für die Antriebseinheit 34 (auch für die weitere unten beschriebenen) kann z.B. bei 5 bar liegen.

Der Antrieb mittels der ersten Antriebseinheit 34 erfolgt jedoch nur einseitig, da es sich hierbei um einen einfach wirkenden Antriebszylinder 38 mit gegenüber liegender Druckfeder handelt. Mit anderen Worten, das mit Druck beaufschlagte Antriebsfluid drückt den Antriebskolben 38a und somit die Kolbenstange 37 mit der Kolbenplatte 40 in Richtung der Längsachse 29a nach links gegen ein Kraftspeicherelement 42a eines Antriebszylinders 38' der zweiten Antriebseinheit 34'. Wird die erste Antriebseinheit 34 dann gelöst, z.B. durch Verringern des Drucks des Antriebsfluids, wird die in dem Kraftspeicherelement 42a gespeicherte Kraft verwendet, um die Kolbenplatte 40 mit der Kolbenstange 37 und den Antriebskolben 38a wieder in seine Ausgangsposition zurück zu verstellen.

Die zweite Antriebseinheit 34' weist eine zentrale Aufnahme 35 auf, in welcher eine Zylinderbuchse 42 des Antriebszylinders 38' eingesetzt ist. In der Zylinderbuchse 42 ist das Kraftspeicherelement 42a, hier eine Druckfeder, angeordnet. Das Kraftspeicherelement 42a stützt sich mit seinem linken Ende an einem Boden der Zylinderbuchse 42 ab. Das andere Ende des Kraftspeicherelementes 42a steht in Kontakt mit einem Flansch 43a einer Antriebsstange 43. Die Antriebsstange 43 erstreckt sich nach rechts in Richtung auf die Kolbenplatte 40 durch eine Stangenlagerung 33c der Bleedanschlusseinheit 33, durch die Bleedkammer 33a und durch die Dichtungsbuchse 21c des Bleedventils 21 hindurch. Das rechte Ende der Antriebsstange 43 steht in Kontakt mit der Kolbenplatte 40. Zudem verläuft die Antriebsstange 43 durch eine Dichtung 44, welche am rechten Ende der Zylinderbuchse 42 angeordnet ist und auch eine Zentrierung zwischen der zweiten Antriebseinheit 34' und der Bleedanschlusseinheit 33 durch einen (hier nicht bezeichneten) Vorsprung, der zu der Bleedanschlussplatte 33 hervorsteht, bildet.

Die Zylinderbuchse 42, das Kraftspeicherelement 42a und die Antriebsstange 43 der zweiten Antriebseinheit 34' weisen eine Mittelachse auf, die in der Längsachse 29a des Sicherheitsventils 11 und in der Kolbenachse 37a der Kolbenstange 37 der ersten Antriebseinheit 34 liegt.

Die Figur 6 zeigt das Sicherheitsventil 11 zur besseren Übersichtlichkeit in einer Übergangsstellung zwischen der Blockstellung und der Durchgangsstellung. Dabei befindet sich die Kolbenplatte 40 etwa in der Mitte der Druckkammer 31a in Bezug auf die Längsachse 29a.

In der Blockstellung des Sicherheitsventils 11 wird die Kolbenplatte 40 durch die zweite Antriebseinheit 34', d.h. durch eine Vorspannkraft des Kraftspeicherelementes 42a, mit ihren Sitzabschnittsflächen 40a und 40b gegen die jeweiligen Sitzabschnitte 20d und 22d der Blockventile 20 und 22 gedrückt, wodurch diese geschlossen werden. Die andere Sitzabschnittsfläche 40c des Bleedventils 21 ist von dem zugehörigen Sitzabschnitt 21d der Dichtungsbuchse 21c des Bleedventils 21 abgehoben, wodurch das Bleedventil 21 geöffnet ist. Die Druckkammer 31a ist so durch das geöffnete Bleedventil 21 über die Bleedkammer 33a, die Leitung 33b mit dem Bleedausgangsanschluss 130 und dann z.B. mit der Atmosphäre verbunden.

Durch Aktivierung der ersten Antriebseinheit 34 wird die Kolbenplatte 40 wie oben kurz beschrieben nach links gegen die Vorspannkraft des Kraftspeicherelementes 42a der zweiten Antriebseinheit 34' in Richtung der Längsachse 29a des Sicherheitsventils 11 so weit verstellt, dass die Seite der Kolbenplatte 40, welche zu der Bleedventileinheit 31 weist, mit ihrer Sitzabschnittsfläche 40c gegen den Sitzabschnitt 21d der Dichtungsbuchse 21c des Bleedventils 21 drückt und somit das Bleedventil 21 schließt. Damit ist die Durchgangsstellung des Sicherheitsventils 11 eingenommen. Die andere Seite der Kolbenplatte 40 ist mit ihren Sitzabschnittsflächen 40a und 40b von den Sitzabschnitte 20d und 22d der Blockventile 20 und 22 abgehoben. Damit sind die Blockventile 20 und 22 geöffnet und können über die Druckkammer 31a miteinander kommunizieren, wodurch der Eingangsanschluss 110 und der Ausgangsanschluss 120 in der Durchgangsstellung verbunden sind.

Ein Hub der Kolbenplatte 40 bei der Verstellung aus der Blockstellung in die Durchgangsstellung beträgt in diesem Ausführungsbeispiel etwa 3 mm im Gegensatz zu üblichen 5 mm.

In weiterer Ausgestaltung weist das Sicherheitsventil 11 die Belüftungseinrichtung 25 nach Figur 5, 5a-5b auf. Der Übersichtlichkeit halber ist die Belüftungseinrichtung 25 mit ihren Komponenten erst in Figur 7 mit Bezugszeichen versehen, wird aber im Folgenden schon beschrieben.

In diesem Ausführungsbeispiel umfasst die Belüftungseinrichtung 25 eine Belüftungsöffnung 28, die mit einem Konus 28a verbunden ist. Die Belüftungsöffnung 28 ist eine zylindrische Bohrung mit einem kleinen Durchmesser, der hier etwa ein Fünftel des Maßes der Kolbenplatte 40 in Längsrichtung 29a entspricht. Eine Länge der Belüftungsöffnung 28 entspricht hier etwa drei Zehntel des Maßes der Kolbenplatte 40 in Längsrichtung 29a. Die Belüftungsöffnung 28 erstreckt sich von der Seite der Kolbenplatte 40, welche zu der Bleedventileinheit 31 hin weist, parallel zu der Längsachse 29a in Richtung auf die Blockventileinheit 30 hin und geht dann in den Konus 28a über, welcher an der Seite der Kolbenplatte 40, die zu der Blockventileinheit 30 hin weist, mit einem Durchmesser mündet, der etwa dem Maß der Kolbenplatte 40 in Längsrichtung 29a entspricht. Diese Maße können natürlich auch andere Werte aufweisen.

Die Belüftungseinrichtung 25 ist in der Kolbenplatte 40 so angeordnet, dass die Mündung des Konus 28a innerhalb der Sitzabschnittsfläche 40a liegt. Das bedeutet, dass die Belüftungseinrichtung 25 mit dem Konus 28a in die Dichtungsbuchse 22c des zweiten Blockventils 22 in der Blockstellung mündet. Zu diesem Zweck ist es erforderlich, dass die Kolbenplatte 40 um die Kolbenachse 37a verdrehsicher angeordnet ist, damit der Konus 28a der Belüftungseinrichtung 25 nicht verstellt werden kann. Dafür kann z.B. die Kolbenplatte 40 durch eine ovale Form in der dazu entsprechend geformten Druckkammer 31a verdrehsicher geführt sein. In einer anderen Ausführung können z.B. der Flansch 39 und die mit ihm kommunizierende Ausnehmung 30c in der Blockventileinheit 30 eine ovale bzw. von einer kreisrunden Form abweichende verdrehsichere Form aufweisen. Es ist auch möglich, dass ein Stift als Führung und Verdrehsicherung vorgesehen ist. So können auch z.B. die Kolbenstange 37 oder/und der Antriebskolben 38 eine entsprechende Verdrehsicherung in Form oder z.B. Stiftführung aufweisen.

Eine solche Verdrehsicherung der Kolbenplatte 40 einschließlich des Antriebskolbens 38a ist in Bezug auf einen Sensor 47 von Vorteil, was unten noch näher erläutert wird.

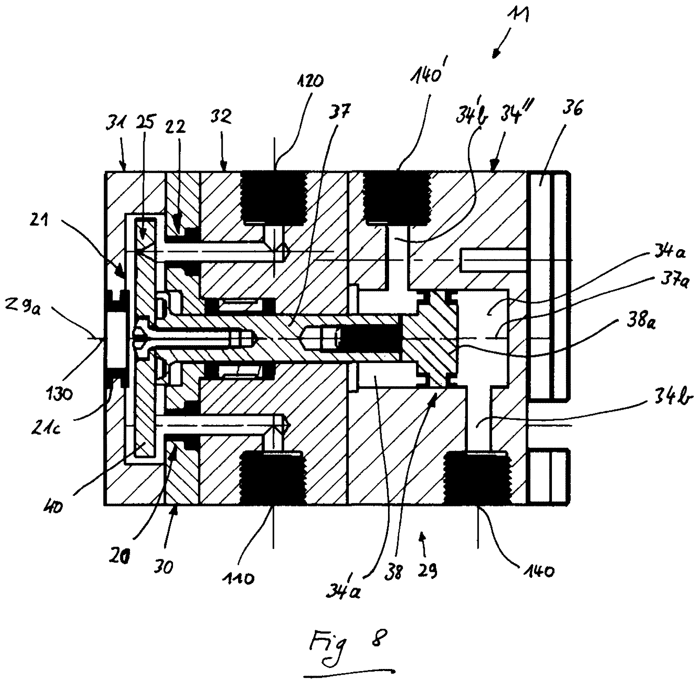

In den Figuren 7 und 8 werden schematische Schnittansichten von Varianten des Ausführungsführungsbeispiels nach Figur 6 gezeigt.

Die Variante nach Figur 7 zeigt eine Ausführung mit zwei einfach wirkenden Antriebszylindern 38 und 38'. Dabei ist der zweite Antriebszylinder 38' wie der erste Antriebszylinder 38 aufgebaut (die Bezugszeichen der Bauteile sind mit einem Apostroph versehen) und befindet sich in einer zweiten Antriebseinheit 34', die auf der linken Seite an der Bleedanschlusseinheit 33 anstelle der zweiten Antriebseinheit 34' der Ausführung nach Figur 6 mit dem Kraftspeicherelement 42a angebracht ist. Der andere Aufbau des Sicherheitsventils 11 entspricht dem Ausführungsbeispiel nach Figur 6 und wird daher nicht wiederholt.

In der Variante nach Figur 8 ist das Sicherheitsventil 11 mit einer Antriebseinheit 34" mit einem doppeltwirkenden Antriebszylinder 38 ausgerüstet und weist daher eine gegenüber den vorherigen Ausführungsbeispielen verkürzte Länge in Längsrichtung 29a auf.

Die Antriebseinheit 34" weist zwei Antriebsanschlüsse 140, 140' auf, die auf gegenüberliegenden Seiten der Antriebseinheit 34" angeordnet sind. Der Antriebsanschluss 140 dient zur Beaufschlagung des Antriebszylinders 38 mit Antriebsfluid zur Verstellung des Sicherheitsventils 11 in die Durchgangsstellung, wohingegen der zweite Antriebsanschluss 140' zur Beaufschlagung des Antriebszylinders 38 von der anderen Seite des doppeltwirkenden Antriebskolbens 38a mit Antriebsfluid zur Verstellung des Sicherheitsventils 11 in die Bockstellung dient.

Eine Bleedanschlusseinheit 33 wie in den vorherigen Beispielen ist hier nicht gezeigt, kann aber optional angebracht werden.

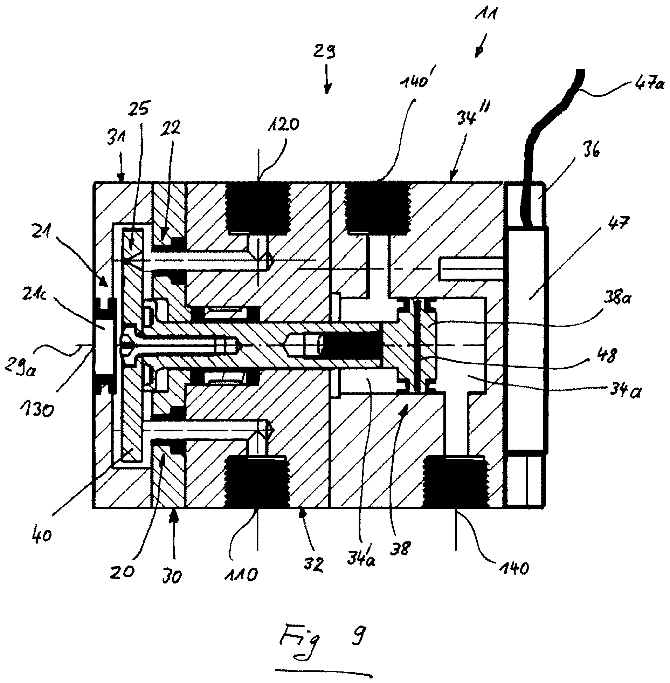

Figur 9 zeigt eine schematische Schnittansicht der Variante nach Figur 8 mit einem Sensor 47.

Der Sensor 47 ist z.B. ein magnetisch betätigbarer Sensor, wie beispielsweise ein Reed-Kontakt, weist einen elektrischen Anschluss in Form einer Sensorleitung 47a auf und ist in der Sensorhalterung 36 an der rechten Außenseite der Antriebseinheit 34" angebracht . Das zu dem Sensor 47 erforderliche Sensorbetätigungselement 48 ist hier als ein Permanentmagnet ausgebildet und in dem Antriebskolben 38a angeordnet.

Der Sensor 47 dient zur Überwachung der Stellung des Sicherheitsventils 11, hier insbesondere zur Ermittlung der Blockstellung des Sicherheitsventils 11, die auch als Sicherheitsstellung bezeichnet wird.

Um eine Hysterese des Sensors 47 unveränderlich beizubehalten ist die oben bereits erwähnte und beschriebene Verdrehsicherung des Antriebskolbens 38a von besonderem Vorteil.

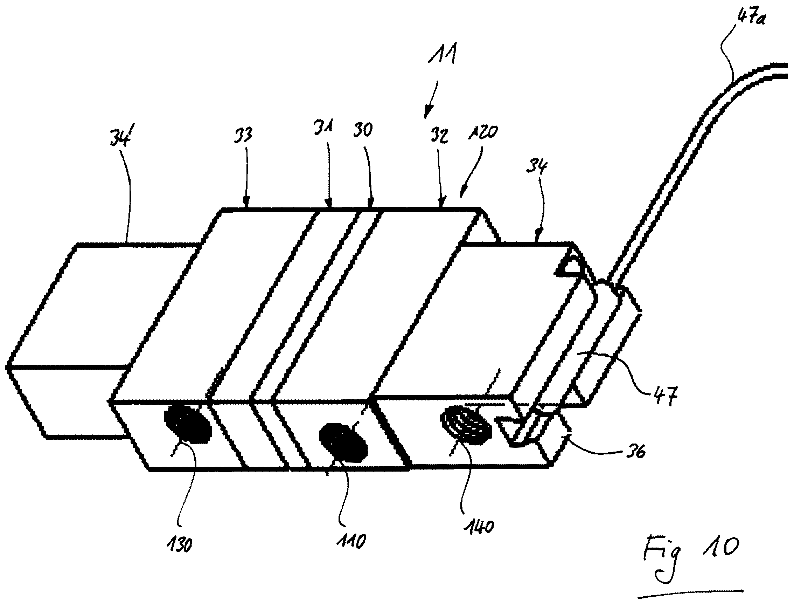

Schließlich zeigt Figur 10 eine schematische Perspektivansicht des Ausführungsführungsbeispiels des Sicherheitsventils 11 nach Figur 6. Hier ist deutlich zu erkennen, dass die einzelnen Funktionseinheiten 30, 31, 32, 33, 34 und 34' in Blockform ausgebildet sind, was aber nicht zwingend notwendig ist.

Die verwendeten Werkstoff müssen gegenüber den verwendeten Dippmedien beständig sein und zusätzlich je nach nationalem Einsatz nationalen Bestimmungen (z.B. FDA in den USA) entsprechend. Die Werkstoffe sind u.a. PA, PPSA, PA12, XF, FKM und ähnliche. Insbesondere ist eine Beständigkeit gegenüber den Bestandteilen Jod, Glyzerin, Chlorhexidin, H₂O₂ gefordert.

Die oben beschriebenen Ausführungsbeispiele schränken die Erfindung nicht ein. Die Erfindung ist im Rahmen der beigefügten Ansprüche modifizierbar.

So ist es z.B. denkbar, dass die Belüftungseinrichtung 25 mit der Belüftungsöffnung 28 und dem Konus 28a als ein separates Einsatzteil ausgebildet und in unterschiedlichen Ausführungen einsetzbar ist. Auch eine Einstellbarkeit ist möglich.

Es ist außerdem denkbar, dass die Dichtungsbuchsen 20d, 22d, 21d auswechselbar sind. Sie können für unterschiedliche Einsatzfälle zudem unterschiedlich ausgebildet sein.

Die Druckkammer 31a kann in einer anderen Ausführung ein noch kleineres Volumen aufweisen. Dadurch kann eine höhere Präzision der Dippmenge erzielt werden. Das Sicherheitsventil 11 kann somit auch in anderem Einsatz als ein Dosierventil Verwendung finden.

Die Kolbenplatte 40 kann in ihren Sitzabschnittsflächen 40a, 40b, 40c auch in einer Zweikomponentenwerkstoffausbildung versehen sein.

Die Antriebseinheiten 34, 34', 34" können natürlich auch andere Antriebsarten als unter Druck stehende Antriebsfluide aufweisen, wie beispielsweise Elektromagnet, Elektromotor, Piezoantrieb u.dgl.

Es ist zudem auch denkbar, dass anstelle des Konus 28a eine Stufenbohrung vorgesehen ist, welche als kreisförmiger Zylinder z.B. mit dem Durchmesser ausgeführt ist, den der Konus 28a an seiner Mündung in der Sitzabschnittsfläche 40a der Kolbenplatte 40 aufweist.

### Bezugszeichen

- 1: Melkanlage
- 2: Zitze
- 3: Zitzenbecher
- 4: Becherleitung
- 5: Gutmilchventil
- 6: Gutmilchleitung
- 7: Schlechtmilchventil
- 8: Schlechtmilchleitung
- 9: Zuleitung
- 10: Reinigungseinrichtung
- 11: Sicherheitsventil
- 12: Dippventil
- 13: Dippmediumquelle
- 14: Wasserventil
- 15: Wasserquelle
- 16: Luftventil
- 17: Spülluftquelle
- 18, 18a: Ausgangsleitung
- 19: Eingangsleitung
- 20: Erstes Blockventil
- 20a: Einlass
- 20b: Auslass
- 20c: Dichtungsbuchse
- 20d: Sitzabschnitt
- 21: Bleedventil
- 21a: Einlass
- 21b: Auslass
- 21c: Dichtungsbuchse
- 21d: Sitzabschnitt
- 22: Zweites Blockventil
- 22a: Einlass
- 22b: Auslass
- 22c: Dichtungsbuchse
- 22d: Sitzabschnitt
- 23: Verbindung
- 23a, 23b, 23c: Verbindungsanschluss
- 24: Betätiger
- 25: Belüftungseinrichtung
- 26: Belüftungsleitung
- 27: Belüftungsstrom
- 28: Belüftungsöffnung
- 28a: Konus
- 29: Ventilkörper
- 29a: Längsachse
- 30: Blockventileinheit
- 30a: Vorsprung
- 30b: Durchgangsöffnung
- 30c: Ausnehmung
- 31: Bleedventileinheit
- 31a: Druckkammer
- 32: Anschlusseinheit
- 32a, 32b: Leitung
- 32c: Kolbenlagerung
- 32d: Dichtungsaufnahme
- 33: Bleedanschlusseinheit
- 33a: Bleedkammer
- 33b: Leitung
- 33c: Stangenlagerung
- 34, 34', 34": Antriebseinheit
- 34a, 34'a: Kolbenkammer
- 34b, 34'b: Leitung
- 35: Aufnahme
- 36: Sensorhalterung
- 37: Kolbenstange
- 37a: Kolbenachse
- 38, 38': Antriebszylinder
- 38a, 38'a: Antriebskolben
- 39: Flansch
- 40: Kolbenplatte
- 40a, 40b, 40c: Sitzabschnittsfläche
- 41: Befestigungselement
- 42: Zylinderbuchse
- 42a: Kraftspeicherelement
- 43: Antriebsstange
- 43a: Flansch
- 44, 45: Dichtung
- 45a: Hülse
- 46: Dichtung
- 47: Sensor
- 47a: Sensorleitung
- 48: Sensorbetätigungselement
- 110: Eingangsanschluss
- 120: Ausgangsanschluss
- 130: Bleedausgangsanschluss
- 140, 140': Antriebsanschluss

## Patentansprüche

1. Sicherheitsventil (11) für eine Reinigungsvorrichtung für eine Melkanlage zum Melken von milchgebenden Tieren, aufweisend ein erstes Blockventil (20) mit einem Eingangsanschluss (110), ein zweites Blockventil (22) mit einem Ausgangsanschluss (120), ein Bleedventil (21) mit einem Bleedausgangsanschluss (130), eine Kolbenstange (37) und eine Antriebseinheit (34, 34', 34"), wobei das Sicherheitsventil (11) von einer Blockstellung, in welcher das erste Blockventil (20) und das zweite Blockventil (22) zur Blockierung des Eingangsanschlusses (110) und des Ausgangsanschlusses (120) geschlossen sind und das Bleedventil (21) zur Verbindung des Bleedausgangsanschlusses (130) mit einer Verbindung (23) geöffnet ist, in eine Durchlassstellung, in welcher das erste Blockventil (20) und das zweite Blockventil (22) zur Verbindung des Eingangsanschlusses (110) über die Verbindung (23) mit dem Ausgangsanschluss (120) geöffnet sind und das Bleedventil (21) zur Blockierung des Bleedausgangsanschlusses (130) geschlossen ist, und zurück verstellbar ausgebildet ist, wobei das erste Blockventil (20), das zweite Blockventil (22) und das Bleedventil (21) des Sicherheitsventils (11) als Sitzventile mit einer gemeinsamen Kolbenplatte (40) ausgebildet sind,
**dadurch gekennzeichnet, dass**
die Kolbenplatte (40) Sitzabschnittsflächen (40a, 40b, 40c) der als Sitzventile ausgebildeten Ventile (20, 22, 21) aufweist, und dass
das Sicherheitsventil (11) einen Ventilkörper (29) mit einer Längsachse (29a) aufweist, der in einer Sandwichbauweise aus verschiedenen Funktionseinheiten aufgebaut ist, die eine Blockventileinheit (30), eine Bleedventileinheit (31), eine Anschlusseinheit (32) und mindestens eine Antriebseinheit (34) umfassen.

2. Sicherheitsventil (11) nach Anspruch 1, **dadurch gekennzeichnet, dass** die Kolbenplatte (40) mit einer Seite über die Kolbenstange (37) mit einer ersten Antriebseinheit (34) gekoppelt und mit einer der einen Seite gegenüberliegenden Seite mittels einer Antriebsstange (43) mit einer zweiten Antriebseinheit (34') gekoppelt ist.

3. Sicherheitsventil (11) nach Anspruch 2, **dadurch gekennzeichnet, dass** die erste Antriebseinheit (34) einen Antriebszylinder (38) mit einem Antriebskolben (38a) aufweist, und dass die zweite Antriebseinheit (34') ein Kraftspeicherelement (42a) aufweist, welches die Kolbenplatte (40) zum Verschluss der Blockventile (20, 22) in die Blockstellung vorspannt und in der Blockstellung hält.

4. Sicherheitsventil (11) nach Anspruch 2, **dadurch gekennzeichnet, dass** die erste Antriebseinheit (34) und die zweite Antriebseinheit (34') jeweils einen Antriebszylinder (38, 38') mit einem Antriebskolben (38a, 38'a) aufweisen.

5. Sicherheitsventil (11) nach Anspruch 1, **dadurch gekennzeichnet, dass** die Kolbenplatte (40) mit einer Seite über die Kolbenstange (37) mit einem doppeltwirkenden Antriebszylinder (38a) der Antriebseinheit (34") gekoppelt ist.

6. Sicherheitsventil (11) nach einem der Ansprüche 1 bis 5, **dadurch gekennzeichnet, dass** die Verbindung (23) aus einer Druckkammer (31a) zwischen der Blockventileinheit (30) und der Bleedventileinheit (31) gebildet ist, wobei die Kolbenplatte (40) in der Druckkammer (31a) aus der Durchlassstellung in die Blockstellung und zurück verstellbar angeordnet ist.

7. Sicherheitsventil (11) nach Anspruch 6, **dadurch gekennzeichnet, dass** in der Blockstellung das erste Blockventil (20) und das zweite Blockventil (22) zur Blockierung des Eingangsanschlusses (110) und des Ausgangsanschlusses (120) durch eine Seite der Kolbenplatte (40) geschlossen sind und das Bleedventil (21) den Bleedausgangsanschluss (130) mit der Druckkammer (31a) verbindet.

8. Sicherheitsventil (11) nach Anspruch 7, **dadurch gekennzeichnet, dass** in der Durchlassstellung das erste Blockventil (20) und das zweite Blockventil (22) durch die Druckkammer (31a) zur Verbindung des Eingangsanschlusses (110) mit dem Ausgangsanschluss (120) kommunizieren, und dass das Bleedventil (21) zur Blockierung des Bleedausgangsanschluss (130) durch die andere Seite der Kolbenplatte (40) geschlossen ist.

9. Sicherheitsventil (11) nach einem der Ansprüche 1 bis 8, **dadurch gekennzeichnet, dass** die Blockventile (20, 22) und das Bleedventil (21) jeweils eine Dichtungsbuchse (20c, 22c, 21c) mit jeweils einem Sitzabschnitt (20d, 22d, 21d) aufweisen, wobei jeder Sitzabschnitt (20d, 22d, 21d) mit jeweils einer zugeordneten Sitzabschnittsfläche (40a, 40b, 40c) der Kolbenplatte (40) zusammenwirkt.

10. Sicherheitsventil (11) nach einem der Ansprüche 1 bis 9, **dadurch gekennzeichnet, dass** das Sicherheitsventil (11) mit einer Belüftungseinrichtung (25) versehen ist, welche mit dem Ausgangsanschluss (120) des zweiten Blockventils (22) kommuniziert.

11. Sicherheitsventil (11) nach Anspruch 10, **dadurch gekennzeichnet, dass** die Belüftungseinrichtung (25) eine Belüftungsöffnung (28), die mit einem Konus (28a) verbunden ist, aufweist, wobei die Belüftungsöffnung (28) in die Kolbenplatte (40) eingeformt ist.

12. Sicherheitsventil (11) nach einem der Ansprüche 1 bis 11, **dadurch gekennzeichnet, dass** die Kolbenplatte (40) und der Antriebskolben (38a) eine Verdrehsicherung um eine Kolbenachse (37a) aufweisen.

13. Sicherheitsventil (11) nach Anspruch 12, **dadurch gekennzeichnet, dass** die Verdrehsicherung durch eine Form der Kolbenplatte (40) und/oder des Antriebskolbens (38a) gebildet ist.

14. Sicherheitsventil (11) nach Anspruch 12, **dadurch gekennzeichnet, dass** die Verdrehsicherung durch die Form eines Flansches (39) der Kolbenstange (37), an welchem die Kolbenplatte (40) befestigt ist, und eine mit ihm kommunizierende ortsfeste Ausnehmung (30c) gebildet ist.

15. Sicherheitsventil (11) nach Anspruch 12, **dadurch gekennzeichnet, dass** die Verdrehsicherung durch einen Stift gebildet ist, der eine Führung für die Kolbenplatte (40) bildet.

16. Sicherheitsventil (11) nach einem der vorhergehenden Ansprüche, **dadurch gekennzeichnet, dass** das Sicherheitsventil (11) einen Sensor (47) zur Erfassung der Blockstellung oder/und der Durchlassstellung aufweist.

17. Sicherheitsventil (11) nach Anspruch 16, **dadurch gekennzeichnet, dass** der Sensor (47) mit einem Sensorbetätigungselement (48), das an oder in dem Antriebskolben (38a) angebracht ist, zusammenwirkt.

18. Sicherheitsventil (11) nach Anspruch 17, **dadurch gekennzeichnet, dass** das Sensorbetätigungselement (48) ein Magnet ist.

## Claims

1. A safety valve (11) for a cleaning apparatus for a milking system for milking milk-producing animals, having a first block valve (20) with an inlet connector (110), a second block valve (22) with an outlet connector (120), a bleed valve (21) with a bleed outlet connector (130), a piston rod (37) and a drive unit (34, 34', 34"), the safety valve (11) being configured such that it can be adjusted from a block position, in which the first block valve (20) and the second block valve (22) are closed for blocking the inlet connector (110) and the outlet connector (120), and the bleed valve (21) is open for connecting the bleed outlet connector (130) to a connection (23), into a passage position, in which the first block valve (20) and the second block valve (22) are open for connecting the inlet connector (110) via the connection (23) to the outlet connector (120), and the bleed valve (21) is closed for blocking the bleed outlet connector (130), and back again, wherein
the first block valve (20), the second block valve (22) and the bleed valve (21) of the safety valve (11) are configured as seat valves with a common piston plate (40),
**characterized in that**
the piston plate (40) has seat section faces (40a, 40b, 40c) of the valves (20, 22, 21) which are configured as seat valves, and that
the safety valve (11) has a valve body (29) with a longitudinal axis (29a), which valve body (29) is constructed in a sandwich design from different functional units which comprise a block valve unit (30), a bleed valve unit (31), a connecting unit (32) and at least one drive unit (34).

2. The safety valve (11) as claimed in claim 1, **characterized in that** the piston plate (40) is coupled with one side via the piston rod (37) to a first drive unit (34) and is coupled with a side which lies opposite the one side by means of a drive rod (43) to a second drive unit (34').

3. The safety valve (11) as claimed in claim 2, **characterized in that** the first drive unit (34) has a drive cylinder (38) with a drive piston (38a), and **in that** the second drive unit (34') has a force accumulator element (42a) which prestresses the piston plate (40) into the block position for closing the block valves (20, 22) and holds it in the block position.

4. The safety valve (11) as claimed in claim 2, **characterized in that** the first drive unit (34) and the second drive unit (34') have in each case one drive cylinder (38, 38') with a drive piston (38a, 38'a).

5. The safety valve (11) as claimed in claim 1, **characterized in that** the piston plate (40) is coupled with one side via the piston rod (37) to a double-acting drive cylinder (38a) of the drive unit (34").

6. The safety valve (11) as claimed in one of claim 1 to 5, **characterized in that** the connection (23) is formed from a pressure chamber (31a) between the block valve unit (30) and the bleed valve unit (31), the piston plate (40) being arranged in the pressure chamber (31a) such that it can be adjusted out of the passage position into the block position and back again.

7. The safety valve (11) as claimed in claim 6, **characterized in that**, in the block position, the first block valve (20) and the second block valve (22) are closed for blocking the inlet connector (110) and the outlet connector (120) by way of one side of the piston plate (40), and the bleed valve (21) connects the bleed outlet connector (130) to the pressure chamber (31a).

8. The safety valve (11) as claimed in claim 7, **characterized in that**, in the passage position, the first block valve (20) and the second block valve (22) communicate by way of the pressure chamber (31a) for connecting the inlet connector (110) to the outlet connector (120), and **in that** the bleed valve (21) is closed for blocking the bleed outlet connector (130) by way of the other side of the piston plate (40).

9. The safety valve (11) as claimed in one of claims 1 to 8, **characterized in that** the block valves (20, 22) and the bleed valve (21) have in each case one sealing bush (20c, 22c, 21c) with in each case one seat section (20d, 22d, 21d), each seat section (20d, 22d, 21d) interacting with in each case one associated seat section face (40a, 40b, 40c) of the piston plate (40).

10. The safety valve (11) as claimed in one of claims 1 to 9, **characterized in that** the safety valve (11) is provided with a venting device (25) which communicates with the outlet connector (120) of the second block valve (22).

11. The safety valve (11) as claimed in claim 10, **characterized in that** the venting device (25) has a venting opening (28) which is connected to a cone (28a), the venting opening (28) being formed in the piston plate (40).

12. The safety valve (11) as claimed in one of claims 1 to 11, **characterized in that** the piston plate (40) and the drive piston (38a) have an anti-rotation safeguard about a piston axis (37a).

13. The safety valve (11) as claimed in claim 12, **characterized in that** the anti-rotation safeguard is formed by way of a shape of the piston plate (40) and/or of the drive piston (38a).

14. The safety valve (11) as claimed in claim 12, **characterized in that** the anti-rotation safeguard is formed by way of the shape of a flange (39) of the piston rod (37), to which flange (39) the piston plate (40) is fastened, and by way of a stationary recess (30c) which communicates with said flange (39).

15. The safety valve (11) as claimed in claim 12, **characterized in that** the anti-rotation safeguard is formed by way of a pin which forms a guide for the piston plate (40).

16. The safety valve (11) as claimed in one of the preceding claims, **characterized in that** the safety valve (11) has a sensor (47) for detecting the block position and/or the passage position.

17. The safety valve (11) as claimed in claim 16, **characterized in that** the sensor (47) interacts with a sensor actuating element (48) which is attached on or in the drive piston (38a).

18. The safety valve (11) as claimed in claim 19, **characterized in that** the sensor actuating element (48) is a magnet.

## Revendications

1. Vanne de sécurité (11) pour un dispositif de nettoyage destiné à une installation de traite pour la traite d'animaux laitiers, présentant une première vanne bloc (20) munie d'un raccord d'entrée (110), une deuxième vanne bloc (22) avec un raccord de sortie (120), une vanne de purge (21) avec un raccord de sortie de purge (130), une tige de piston (37) et une unité d'entraînement (34, 34', 34"), laquelle vanne de sécurité (11) est conçue pour passer d'une position de blocage, dans laquelle la première vanne bloc (20) et la deuxième vanne bloc (22) sont fermées pour obturer le raccord d'entrée (110) et le raccord de sortie (120) et la vanne de purge (21) est ouverte pour faire communiquer le raccord de sortie de purge (130) avec une communication (23), à une position passante dans laquelle la première vanne bloc (20) et la deuxième vanne bloc (22) sont ouvertes pour faire communiquer le raccord d'entrée (110) avec le raccord de sortie (120) par la communication (23) et la vanne de purge (21) est fermée pour obturer le raccord de sortie de purge (130), et vice versa, la première vanne bloc (20), la deuxième vanne bloc (22) et la vanne de purge (21) de la vanne de sécurité (11) étant conformées comme des soupapes à siège avec une plaque de piston (40) commune,
**caractérisée en ce que** la plaque de piston (40) présente des surfaces de partie de siège (40a, 40b, 40c) des vannes (20, 22, 21) conformées comme des soupapes à siège et **en ce que** la vanne de sécurité (11) présente un corps de vanne (29) avec un axe longitudinal (29a), construite en sandwich à partir de différentes unités fonctionnelles qui comprennent une unité de vannes blocs (30), une unité de vanne de purge (31), une unité de raccordement (32) et au moins une unité d'entraînement (34).

2. Vanne de sécurité (11) selon la revendication 1, **caractérisée en ce que** la plaque de piston (40) est couplée par un côté à une première unité d'entraînement (34) par l'intermédiaire de la tige de piston (37) et par un côté opposé au premier côté à une deuxième unité d'entraînement (34') au moyen d'une tringle d'entraînement (43).

3. Vanne de sécurité (11) selon la revendication 2, **caractérisée en ce que** la première unité d'entraînement (34) présente un cylindre d'entraînement (38) avec un piston d'entraînement (38a) et **en ce que** la deuxième unité d'entraînement (34') présente un élément accumulateur de force (42a) qui précontraint la plaque de piston (40) dans la position de blocage pour fermer les vannes blocs (20, 22) et la maintient dans la position de blocage.

4. Vanne de sécurité (11) selon la revendication 2, **caractérisée en ce que** la première unité d'entraînement (34) et la deuxième unité d'entraînement (34') présentent chacune un cylindre d'entraînement (38, 38') avec un piston d'entraînement (38a, 38'a).

5. Vanne de sécurité (11) selon la revendication 1, **caractérisée en ce que** la plaque de piston (40) est couplée par un côté, par l'intermédiaire de la tige de piston (37), à un cylindre d'entraînement à double action (38a) de l'unité d'entraînement (34").

6. Vanne de sécurité (11) selon l'une des revendications 1 à 5, **caractérisée en ce que** la communication (23) est formée par une chambre de pression (31a) entre l'unité de vannes blocs (30) et l'unité de vanne de purge (31), la plaque de piston (40) étant disposée dans la chambre de pression (31a) de façon à pouvoir se déplacer de la position passante à la position de blocage et retour.

7. Vanne de sécurité (11) selon la revendication 6, **caractérisée en ce que**, dans la position de blocage, la première vanne bloc (20) et la deuxième vanne bloc (22) sont fermées par un côté de la plaque de piston (40) pour obturer le raccord d'entrée (110) et le raccord de sortie (120) et la vanne de purge (21) fait communiquer le raccord de sortie de purge (130) avec la chambre de pression (31a).

8. Vanne de sécurité (11) selon la revendication 7, **caractérisée en ce que**, dans la position passante, la première vanne bloc (20) et la deuxième vanne bloc (22) communiquent à travers la chambre de pression (31a) pour faire communiquer le raccord d'entrée (110) avec le raccord de sortie (120) et **en ce que** la vanne de purge (21) est fermée par l'autre côté de la plaque de piston (40) pour obturer le raccord de sortie de purge (130).

9. Vanne de sécurité (11) selon l'une des revendications 1 à 8, **caractérisée en ce que** les vannes blocs (20, 22) et la vanne de purge (21) présentent chacune un manchon d'étanchéité (20c, 22c, 21c) avec une partie de siège (20d, 22d, 21d), chaque partie de siège (20d, 22d, 21d) coopérant avec une surface de partie de siège (40a, 40b, 40c) correspondante de la plaque de piston (40).

10. Vanne de sécurité (11) selon l'une des revendications 1 à 9, **caractérisée en ce que** la vanne de sécurité (11) est munie d'un dispositif d'aération (25) qui communique avec le raccord de sortie (120) de la deuxième vanne bloc (22).

11. Vanne de sécurité (11) selon la revendication 10, **caractérisée en ce que** le dispositif d'aération (25) présente une ouverture d'aération (28) reliée à un cône (28a), laquelle ouverture d'aération (28) est formée dans la plaque de piston (40).

12. Vanne de sécurité (11) selon l'une des revendications 1 à 11, **caractérisée en ce que** la plaque de piston (40) et le piston d'entraînement (38a) présentent une sécurité contre la rotation autour d'un axe de piston (37a).

13. Vanne de sécurité (11) selon la revendication 12, **caractérisée en ce que** la sécurité contre la rotation est créée par une forme de la plaque de piston (40) et/ou du piston d'entraînement (38a).

14. Vanne de sécurité (11) selon la revendication 12, **caractérisée en ce que** la sécurité contre la rotation est créée par la forme d'une bride (39) de la tige de piston (37) sur laquelle la plaque de piston (40) est fixée et par un creux (30c) stationnaire communiquant avec elle.

15. Vanne de sécurité (11) selon la revendication 12, **caractérisée en ce que** la sécurité contre la rotation est créée par une clavette qui forme un guide pour la plaque de piston (40).

16. Vanne de sécurité (11) selon l'une des revendications précédentes, **caractérisée en ce que** la vanne de sécurité (11) présente un capteur (47) pour la détection de la position de blocage et/ou de la position passante.

17. Vanne de sécurité (11) selon la revendication 16, **caractérisée en ce que** le capteur (47) coopère avec un élément d'actionnement à capteur (48) qui est posé sur ou dans le piston d'entraînement (38a).

18. Vanne de sécurité (11) selon la revendication 17, **caractérisée en ce que** l'élément d'actionnement à capteur (48) est un aimant.
